# EUROPEAN PATENT APPLICATION

(11) **EP 2 672 315 A1**
(43) Date of publication of application: **11.12.2013**
(21) Application number: 11857471.4
(22) Date of filing: 24.05.2011
(51) Int. Cl.: G02F 1/1343, G02F 1/1335, G02F 1/1368

(54) **LIQUID CRYSTAL DISPLAY SUBSTRATE AND LIQUID CRYSTAL DISPLAY DEVICE**

(30) Priority: 01.02.2011 JP 2011019833
(71) Applicant: Toppan Printing Co., Ltd., Taito-ku, Tokyo 110-0016 (JP)
(72) Inventor: HIBAYASHI, Yasuhiro, Taito-ku, Tokyo 110-0016 (JP); FUKUYOSHI, Kenzo, Taito-ku, Tokyo 110-0016 (JP)
(74) Representative: TBK
(86) International application number: PCT/JP2011/061876
(87) International publication number: WO 2012/105067

(57) **Abstract**

Provided is a substrate for liquid crystal display to execute effective viewing angle control while preventing a liquid crystal display device from becoming heavy and thick and preventing an aperture ratio from decreasing, by realizing effective vision control without using a vision control element or a vision control pixel. The substrate for liquid crystal display includes a polygonal pixel or a polygonal sub-pixel and linear patterns 7. The polygonal pixel or the polygonal sub-pixel has parallel sides opposite to each other in a plane shape. The linear patterns 7 are included on parallel sides opposite to each other of the polygonal pixel or the polygonal sub-pixel and allows skew light 8 to pass therethrough.

## Description

### Technical Field

An Embodiment of the present invention relate to a substrate for liquid crystal display, and a liquid crystal display device including the substrate for liquid crystal display.

### Background Art

With progressing reduction in a weight of an electronic device using a liquid crystal display device in recent years, opportunities in which an information device such as a portable phone or mobile PC is used in a public place are increasing. When the information device is used in the public place, there is a possibility that secret information or private information displayed in the liquid crystal display device is visually recognized by the other therearound.

When the liquid crystal display device is caused to display secret information or private information in the public place, it is preferable that a field of view of the liquid crystal display device is narrow. When information displayed in the liquid crystal display device is viewed by a plurality of persons, it preferable that the field of view of the liquid crystal display device is wide. There are generally two methods of field-of-view control.

A first field-of-view control method is disclosed by Patent Literature 1 (Japanese Patent No. 3322197) and Patent Literature 2 (Japanese Patent No. 4367206). In the first field-of-view control method, two panels including a display panel including a liquid crystal display element to make a main display and a viewing angle control panel including a liquid crystal element for viewing angle control that switches a wide field of view and a narrow field of view are used. In Patent Literature 1, the liquid crystal element for viewing angle control is an element for phase difference control and the wide field of view and the narrow field of view are switched based on whether a voltage is applied to the element for phase difference control. Patent Literature 2 discloses a technology that makes the display of the liquid crystal display device harder to view by forming a checker flag pattern including a bright region and a dark region in a formation region of a liquid crystal element for viewing angle control. In both cases of Patent Literature 1 and Patent Literature 2, it is necessary to include a viewing angle control panel in which the liquid crystal element for viewing angle control is disposed, which may makes the whole display device thicker and heavier and in some cases impractical. If the display device becomes thicker and heavier, user convenience of a portable personal terminal such as a portable phone, mobile PC or the like decreases.

As a second field-of-view control method, a method of adding new pixels for viewing angle control to a display panel including a liquid crystal display element for display or providing a region for viewing angle control in a portion of display pixels formed in a display panel is known. The second field-of-view control method is suitable for a portable display device because there is no need to add a viewing angle control panel. Patent Literature 3 (Jpn. Pat. Appln. KOKAI Publication No. 2010-128126) is an example of a method of adding pixels for viewing angle control to a display panel. According to Patent Literature 3, sub-pixels for viewing angle control are used for viewing angle control. Patent Literature 4 (Jpn. Pat. Appln. KOKAI Publication No. 2007-65046) is an example of a method of providing a region for viewing angle control in a display panel. According to Patent Literature 4, a first counter electrode and a second counter electrode are provided in a pixel, different counter voltages are applied for the first counter electrode connected to a thin-film transistor and the second counter electrode, and the second counter electrode is used for viewing angle control. When pixels for viewing angle control are included in a display panel or a viewing angle control region in which a plurality of counter electrodes is separately formed is formed in a display panel, an effective display area decreases so that the display may be dark. By adopting the pixels for viewing angle control or the viewing angle control region, display content can be made more difficult for third parties therearound to visually recognize the content. However, light from the pixels for viewing angle control or the viewing angle control region is more likely to enter eyes even for an observer (a user of the liquid crystal display device), leading to lower display quality. In addition, the technology described in Patent Literature 4 needs two counter voltages, which makes a power supply system more complex. Further, Patent Literature 4 does not discuss a VA (Vertically Alignment) liquid crystal or ECB (Electrically Changed Birefringence) liquid crystal applied to a high-contrast liquid crystal display device.

A liquid crystal display device of the normal VA system or ECB system has a basic configuration in which liquid crystals are sandwiched between a color filter substrate including a common electrode and an array substrate including a plurality of pixel electrodes (for example, transparent electrodes electrically connected to thin-film transistor (TFT) elements and formed in a comb-like pattern) driving the liquid crystals. In this configuration, a drive voltage is applied between the common electrode on the color filter and pixel electrodes formed on the array substrate side to drive the liquid crystals. Normally, a thin film of conductive metal oxide such as ITO (Indium Tin Oxide), IZO (Indium Zinc Oxide), and IGZO (Indium Gallium Zinc Oxide) is used as a transparent conductive film used for the pixel electrode and the common electrode on the surface of the color filter.

In the conventional viewing angle control, as described above, the liquid crystal display device may become heavy and thick by including the viewing angle control panel including the liquid crystal element for viewing angle control.

Also in the conventional viewing angle control, an effective aperture ratio may be decreased by including the pixels for viewing angle control in the display panel.

### Summary of Invention

### Technical Problem

An object of an embodiment of the present invention is to provide a substrate for liquid crystal display to execute effective viewing angle control by preventing a liquid crystal display device from becoming heavy and thick and preventing an aperture ratio from decreasing and a liquid crystal display device including the substrate for liquid crystal display.

### Solution to the Problems

In a first aspect, a substrate for liquid crystal display includes a polygonal pixel or a polygonal sub-pixel and linear patterns. The polygonal pixel or the polygonal sub-pixel includes parallel sides opposite to each other in a plane shape. The linear patterns are included on the parallel sides opposite to each other of the polygonal pixel or the polygonal sub-pixel and allows skew (or inclined) light to pass through.

In a second aspect, a liquid crystal display device includes a substrate for liquid crystal display and an array substrate. The substrate for liquid crystal display includes a polygonal pixel or a polygonal sub-pixel having parallel sides opposite to each other in a plane shape and linear patterns included on parallel sides opposite to each other of the polygonal pixel or the polygonal sub-pixel to allow skew light to pass through. The array substrate is opposite to the substrate for liquid crystal display via a liquid crystal layer and includes an active element to drive liquid crystals of the liquid crystal layer.

### Advantageous Effects of Invention

According to the present invention, a liquid crystal display device can be prevented from becoming heavy and thick in viewing angle control and an aperture ratio can be prevented from decreasing so that effective viewing angle control can be exercised.

### Brief Description of Drawings

FIG. 1 is a partial sectional view showing an example of a liquid crystal display device according to a first embodiment.
FIG. 2 is a partial sectional view showing an example of a substrate for liquid crystal display according to the first embodiment.
FIG. 3 is a partial plan view showing an example of the substrate for liquid crystal display according to the first embodiment.
FIG. 4 is a partial sectional view showing an example of a relationship between a configuration of the liquid crystal display device according to the first embodiment and skew light.
FIG. 5 is a partial sectional view showing a modification of a shape of a transparent pattern in the liquid crystal display device according to the first embodiment.
FIG. 6 is a partial sectional view showing an example of the liquid crystal display device when no drive voltage is applied in the first embodiment.
FIG. 7 is a partial sectional view showing an example of the liquid crystal display device immediately after the drive voltage is applied.
FIG. 8 is a partial sectional view showing an example of the liquid crystal display device when some time passes after the drive voltage is applied.
FIG. 9 is a partial sectional view showing an example of an action of first electrodes P1 to P3 and second electrodes C1 to C3 when no drive voltage is applied (initial alignment state) in the liquid crystal display device.
FIG. 10 is a partial sectional view showing an example of the action of the first electrodes P1 to P3 and the second electrodes C1 to C3 when the drive voltage is applied in the liquid crystal display device.
FIG. 11 is a partial plan view showing a first example of the first electrode included in the sub-pixel.
FIG. 12 is a partial plan view showing a second example of the first electrode included in the sub-pixel.
FIG. 13 is a partial plan view showing a third example of the first electrode included in the sub-pixel.
FIG. 14 is a partial plan view showing a modification of an arrangement of sub-pixels.
FIG. 15 is a plan view showing an example of a relationship between a polygonal sub-pixel and first electrodes P1 to P6.
FIG. 16 is a partial sectional view showing an example of a substrate for liquid crystal display according to a third embodiment.
FIG. 17 is a sectional view showing an example of a configuration of an edge light type liquid crystal display device.
FIG. 18 is a partial sectional view showing an example of a liquid crystal display device in halftone display after a drive voltage is applied.
FIG. 19 is a partial sectional view showing an example of a liquid crystal display device according to a sixth embodiment.
FIG. 20 is a partial sectional view showing a first example of a configuration to drive liquid crystals at low voltage in a liquid crystal display device according to a seventh embodiment.
FIG. 21 is a partial sectional view showing a second example of the configuration to drive the liquid crystals at low voltage in the liquid crystal display device according to the seventh embodiment.

Embodiments for Carrying Out the Invention Embodiments of the present invention will be described below with reference to the drawings. In the description that follows, the same reference numerals are attached to the same or substantially the same functions and elements and the description thereof will be provided when necessary.

### (First embodiment)

In the present embodiment, a normally black liquid crystal display device including initial vertical alignment liquid crystals or initial horizontal alignment liquid crystals will be described. In the present embodiment, a configuration in a unit of sub-pixel will be described. However, a configuration similar to that in the present embodiment may be applied in a unit of pixel.

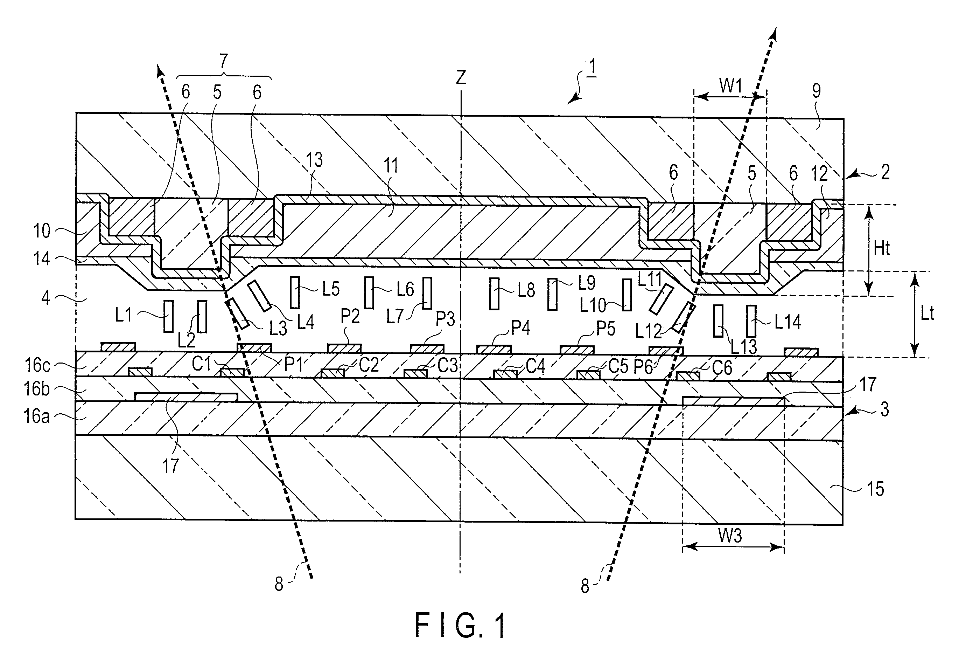

FIG. 1 is a partial sectional view showing an example of a liquid crystal display device according to the present embodiment. FIG. 1 is a cross section perpendicular to a comb axis of a comb-like (may also be stripe-like) electrode. In FIG. 1, an operation of liquid crystals L1 to L14 by a substrate for liquid crystal display 2 and an array substrate 3 and skew lights 8 realized by the operation are illustrated. In FIG. 1, the illustration of a vertical alignment film, polarizing plate, phase difference plate, and TFT is omitted.

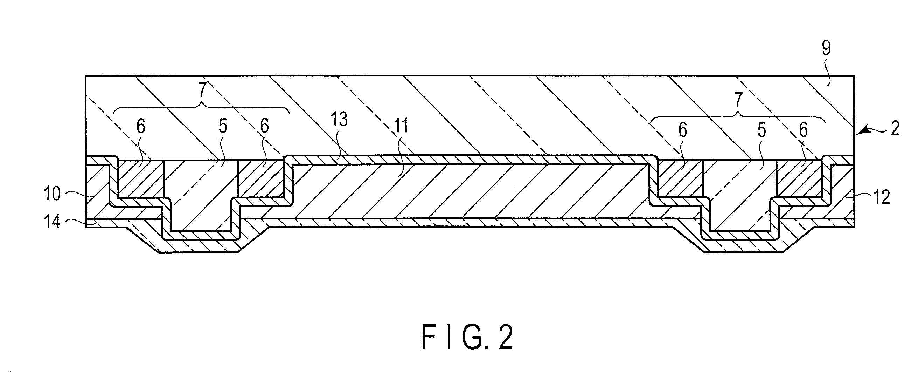

FIG. 2 is a partial sectional view showing an example of the substrate for liquid crystal display 2 in FIG. 1.

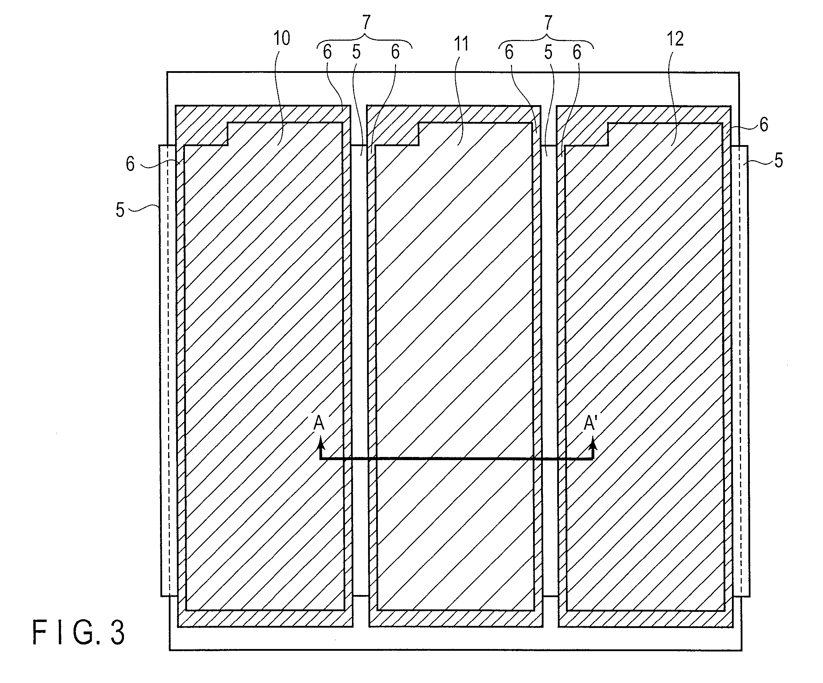

FIG. 3 is a partial plan view showing an example of the substrate for liquid crystal display 2 according to the present embodiment. A-A' section in FIG. 3 corresponds to FIG. 1.

A liquid crystal display device 1 is assumed to be a VA system or ECB system. Liquid crystals whose dielectric constant anisotropy are positive is used as ECB liquid crystals.

In the liquid crystal display device 1, the substrate for liquid crystal display 2 and the array substrate 3 in which liquid crystal driving elements (active element) such as TFT are formed are opposite to each other. A liquid crystal layer 4 is sandwiched between the substrate for liquid crystal display 2 and the array substrate 3.

The plan view shape of an opening of a polygonal sub-pixel arranged in a matrix shape is a polygon in which opposite sides are parallel to each other like, for example, a square, rectangle, parallelogram, and polygon bent in a "<" formed dogleg-shape ("V" shape or boomerang shape). In the example in FIG. 3, the substrate for liquid crystal display 2 includes a linear pattern 7 in which a linear transparent pattern 5 of a transparent resin layer is sandwiched between linear light-shielding patterns 6 of a light-shielding layer in at least two sides opposite to each other of sides of a matrix pattern partitioning a plurality of polygonal sub-pixels on a plane. In the liquid crystal display device 1, the skew light 8 passing through the transparent pattern 5 is used for viewing angle control. In the linear pattern 7, the thickness in the vertical direction of the transparent pattern 5 is thicker than the thickness in the vertical direction of the light-shielding pattern 6. Therefore, the transparent pattern 5 protrudes toward the side of the liquid crystal layer 4 more than the light-shielding pattern 6. Further, in the substrate for liquid crystal display 2, the formation portion of the linear pattern 7 is thicker than the formation portion of, for example, color filters 10 to 12.

In the present embodiment, the liquid crystal layer 4 is assumed to include VA liquid crystals. Therefore, the liquid crystals L1 to L14 of the liquid crystal layer 4 are liquid crystals whose dielectric constant anisotropy is negative. The initial alignment of the liquid crystals L1 to L14 of the liquid crystal layer 4 is vertical. In FIG. 1, excluding the liquid crystals L3, L4, L11, L12 near the boundaries between the transparent patterns 5 and the light-shielding patterns 6, the liquid crystals L1, L2, L5 to L10, L13, L14 are aligned perpendicularly to the surface of the substrate for liquid crystal display 2 and the array substrate 3. In the present embodiment, a vertical alignment film is used and alignment processing such as photo alignment and rubbing can be omitted. In the present embodiment, as will be described later, exact pre-tilt control such as 89 degrees needed for the conventional VA system is not needed and liquid crystals of simple initial vertical alignment of, for example, 90 degrees can be used.

In the present embodiment, a liquid crystal material containing fluorine atoms in the molecular structure (hereinafter, referred to as a fluorine based liquid crystal) is used as the liquid crystal material. In the present embodiment, second electrodes C1 to C6 protrude toward the transparent pattern 5 (from the center toward the edge) more than the corresponding first electrodes P1 to P6 in the horizontal direction. When a drive voltage of the liquid crystals is applied, a substantially strong electric field is generated between the first electrodes P1 to P6 and the second electrodes C1 to C6. Thus, in the present embodiment, the liquid crystals can be driven by using a liquid crystal material whose dielectric constant anisotropy is smaller than that of a liquid crystal material used for conventional vertical alignment. In general, a liquid crystal material whose dielectric constant anisotropy is smaller has a low viscosity. Therefore, when an electric field strength of the same level is applied between the first electrodes P1 to P6 and the second electrodes C1 to C6, a liquid crystal material whose dielectric constant anisotropy is small can respond more quickly than a conventional liquid crystal material. Moreover, because the fluorine based liquid crystal has a low dielectric constant, the uptake of ionic impurities can be reduced so that performance degradation like a lower voltage retention caused by impurities can be prevented and an occurrence of uneven display can be inhibited.

In the liquid crystal display device 1 in the initial vertical alignment, in contrast to a liquid crystal display device in the initial horizontal alignment, alignment of optical axes of the polarizing plate and the phase difference plate provided on both sides or one side of the liquid crystal display device 1 may not be exact. In the liquid crystal display device 1 in the initial vertical alignment, retardation when no voltage is applied is, for example, 0 nm. Even if the liquid crystals and, for example, a lagging axis of the polarizing plate is slightly shifted in the liquid crystal display device 1 in the initial vertical alignment, light leakage is less likely to occur and an almost complete black display can be obtained. If an optical axe is shifted by several degrees between the liquid crystals in the initial horizontal alignment and a polarizing plate, light leakage occurs and the contrast of the liquid crystal display device may be somewhat degraded when compared with the liquid crystals in the initial vertical alignment.

In the present embodiment, the array substrate 3 includes the first electrodes P1 to P6 as pixel electrodes and the second electrodes C1 to C6 as common electrodes for each polygonal sub-pixel. Different potentials are applied to the first electrodes P1 to P6 and the second electrodes C1 to C6 to drive the liquid crystals. Incidentally, the array substrate 3 may not include the second electrodes C1 to C6. In such a case, the liquid crystal display device does not include the second electrodes C1 to C6 and is comprised of the array substrate including the first electrodes P1 to P6 and active elements such as TFT and the substrate for liquid crystal display 2. When the second electrodes C1 to C6 are omitted, the plan view shape of the first electrodes P1 to P6 may be a comb-like pattern or a pattern in which a plurality of slit-like openings is formed in a solid transparent conductive film.

In the example of FIGS. 1 and 2, the linear pattern 7 is formed above one side of a transparent substrate 9 such as glass. A third electrode 13 as a transparent conductive film is formed above the transparent substrate 9 and the linear pattern 7 including the transparent pattern 5 and the light-shielding patterns 6 sandwiching the transparent pattern 5 therebetween. Next, the red color filter 10, the green color filter 11, and the blue color filter 12 are provided above the third electrode 13 in the vertical direction and between the linear patterns 7 (in a position where the linear pattern 7 is not formed) in the horizontal direction. Accordingly, a configuration in which the linear patterns 7 are included at edges of the red color filter 10, the green color filter 11, and the blue color filter 12 is obtained. A protective layer 14 is stacked above the third electrode 13 and also the red color filter 10, the green color filter 11, and the blue color filter 12 when necessary.

In the example of FIG. 3, the arrangement relationship between the red color filter 10, the green color filter 11, and the blue color filter 12, and the linear pattern 7 is shown. In the present embodiment, active elements that drive the liquid crystals such as TFT are arranged below the linear pattern 7 or below the light-shielding pattern 6 in a direction perpendicular to the plane of the liquid crystal display device 1 (thickness direction). In the sectional views of FIGS. 1 and 2, the substrate for liquid crystal display 2 is in a state of 180° rotation after a manufacturing process is completed. In the manufacturing process of the substrate for liquid crystal display 2, the linear pattern 7 is formed above the transparent substrate 9. Next, the third electrode 13 is formed above the transparent substrate 9 and the linear pattern 7. Next, the red color filter 10, the green color filter 11, and the blue color filter 12 are formed above the third electrode 13 and between the linear patterns 7. Next, the protective layer 14 is stacked above the red color filter 10, the green color filter 11, and the blue color filter 12 and the third electrode 13 above the linear pattern 7 when necessary.

The side of the protective layer 14 of the substrate for liquid crystal display 2 becomes the side of the liquid crystal layer 4 of the liquid crystal display device 1. The side of the transparent substrate 9 of the substrate for liquid crystal display 2 becomes the side of an observer.

In the present embodiment, the skew light 8 passes through the transparent pattern 5. The viewing angle control is realized by the skew light 8.

The array substrate 3 includes a substrate 15, insulating layers 16a to 16c, a metal wire 17, the first electrodes P1 to P6, and the second electrodes C1 to C6.

The insulating layer 16a is formed above the substrate 15. The metal wire 17 is formed above the insulating layer 16a. The metal wire 17 is formed in a position overlapping with the linear pattern 7 in the vertical direction of the liquid crystal display device 1. With this configuration, light in the vertical direction is blocked by the metal wire 17 and is not emitted from the transparent pattern 5 of the linear pattern 7. The insulating layer 16b is formed above the insulating layer 16a and the metal wire 17. The second electrodes C1 to C6 are formed above the insulating layer 16b. The insulating layer 16c is formed above the insulating layer 16b and the second electrodes C1 to C6. The first electrodes P1 to P6 are formed above the insulating layer 16c.

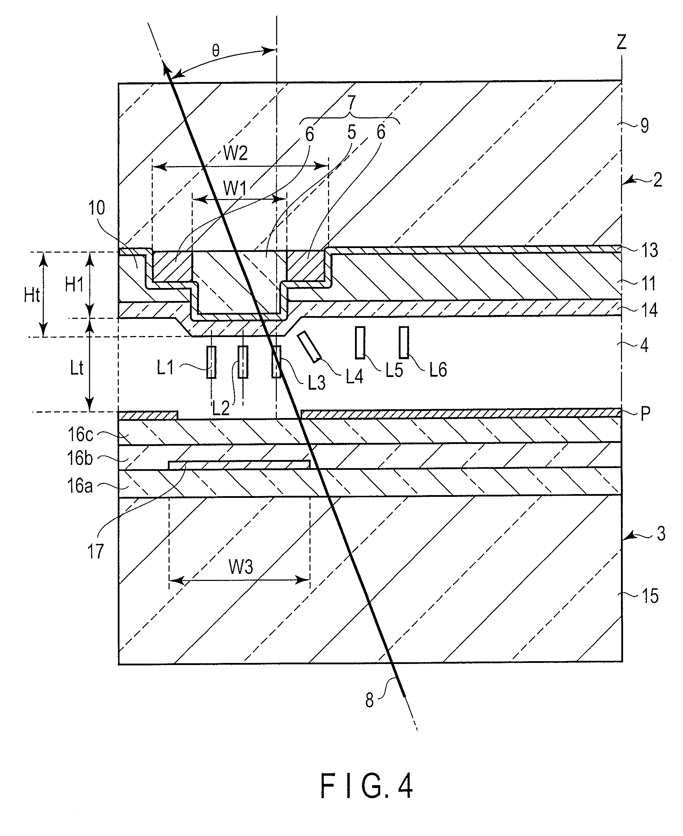

FIG. 4 is a partial sectional view showing an example of a relationship between the configuration of the liquid crystal display device 1 according to the present embodiment and the skew light 8. In FIG. 4, only the left side from a center axis Z of the sub-pixel is shown to simplify the description. Further, in FIG. 4, a case when a first electrode P has a rectangular shape is shown as an example. In FIG. 4, the illustration of the vertical alignment film, polarizing plate, phase difference plate, and TFT is omitted.

The array substrate 3 includes the first electrode P in a rectangular shape and TFT connected to the first electrode P in a rectangular shape. The side of the first electrode P of the array substrate 3 and the side of a protective layer 14 of the substrate for liquid crystal display 2 are opposite to each other via the liquid crystal layer 4.

In FIG. 4, the liquid crystals L1 to L6 have negative dielectric constant anisotropy. Excluding the liquid crystals L3, L4 near the boundary between the transparent pattern 5 and the light-shielding pattern 6, the liquid crystals L1, L2, L5, L6 are aligned perpendicularly to the surface of the substrate for liquid crystal display 2 and the array substrate 3. In an ECB system, the alignment film is rubbed and liquid crystals of positive dielectric constant anisotropy are aligned horizontally. It is assumed that the polarizing plate is a cross Nicol and the liquid crystal display device 1 is normally black. In the array substrate 3, the metal wire 17 that can be used as a signal line is arranged in a position overlapping with the linear pattern 7 in the vertical direction.

Incidentally, the metal wire 17 is manufactured by forming a light-shielding metal thin film used for TFT manufacture as a pattern. The metal wire 17 may be any of a video signal line, scan signal line, common electrode wire, and common conductor wire used to prevent an electrostatic breakdown of a TFT element when an alignment film is rubbed. The distance between the metal wire 17 and the first electrode P in the vertical direction may be increased to avoid electric crosstalk and unfavorable formation of a parasitic capacitance.

In FIG. 4, no drive voltage is applied and a state in which the liquid crystals L1, L2, L5, L6 are in the initial vertical alignment is shown. The liquid crystal L3 near the surface of the transparent pattern 5 is aligned slightly obliquely. The skew light 8 passes through the liquid crystal L3 by traversing the liquid crystal obliquely. The skew light 8 has an angle θ with the liquid crystal L3 and thus, the liquid crystal L3 gives a phase difference to the skew light 8. The skew light 8 passes through a polarizing plate (not shown), and the skew light 8 is emitted to the outside as a leaking light. In this case, the transparent pattern 5 is visually recognized as a black display from the direction of the observer, but a leaking light is observed by a third party in an oblique direction and the transparent pattern is not visually recognized as a black display.

The amount of the leaking light and the angle θ of the skew light 8 can be controlled by a width W1 of the transparent pattern 5, a width W2 of the linear pattern 7, a thickness H1 of the transparent pattern 5, a thickness Ht of the transparent pattern 5 and the protective layer 14, a thickness Lt of the liquid crystal layer 4, a width W3 of the metal wire 17, or a pre-tilt angle of the liquid crystal L3 near the surface of the transparent pattern 5.

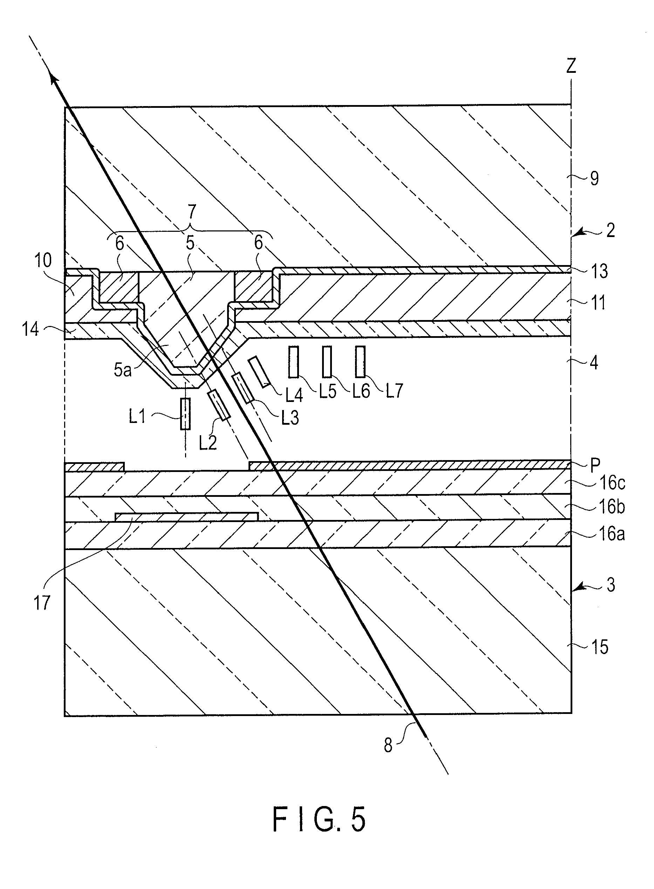

FIG. 5 is a partial sectional view showing a modification of a shape of the transparent pattern 5 in the liquid crystal display device 1 according to the present embodiment.

A side of a portion (tip portion of the section of the transparent pattern 5) 5a of the section of the transparent pattern 5 protruding to the side of the liquid crystal layer 4 more than the light-shielding pattern 6 and the color filters 10 to 12 may be inclined so that the closer to the tip, the thinner the protruding portion 5a becomes. The protruding portion 5a of the transparent pattern 5 may be rounded off. By adjusting the height of the protruding portion 5a of the transparent pattern 5, leaking light can be reduced by aligning the pre-tilt angle of the liquid crystal L3 and the angle of the skew light 8. When the thickness Ht of the transparent pattern 5 and the protective layer 14 and the thickness Lt of the liquid crystal layer 4 are made smaller or the width W3 of the metal wire 17 is made smaller than the width W1 of the transparent pattern 5, the angle e of the skew light 8 increases. However, if the angle θ is increased, the intensity of the skew light 8 decreases and thus, conditions of the thickness Lt and the width W1 are appropriately adjusted by fitting to the effect of intended viewing angle control.

The skew light 8 is emitted, as described above, via the protruding portion (apex of the section of the transparent pattern) 5a of the linear pattern 7. Driving of liquid crystals arranged near the protruding portion 5a of the linear pattern 7 may be used as a drive trigger of the liquid crystals of a VA system or ECB system. Driving of the liquid crystals will be described by using VA liquid crystals.

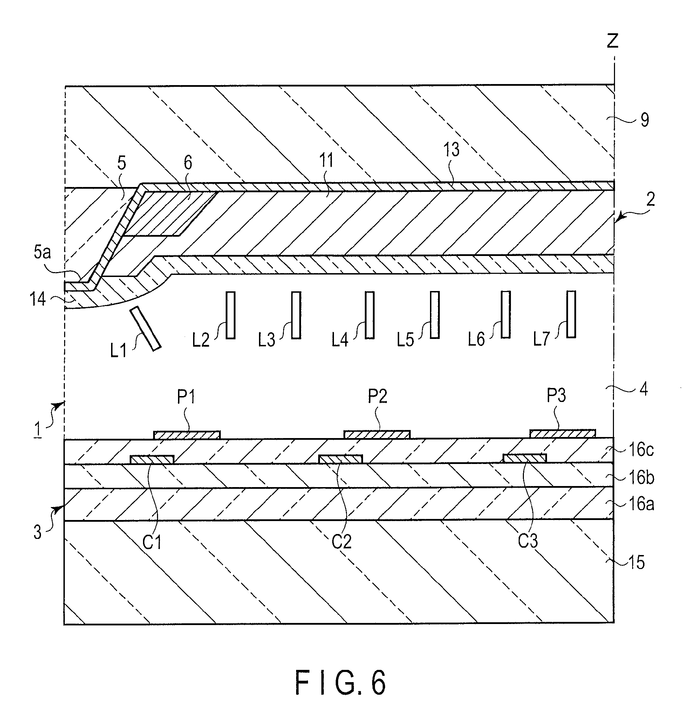

FIG. 6 is a partial sectional view showing an example of the liquid crystal display device 1 when no drive voltage is applied in the present embodiment. In FIG. 6, only the left side from the center axis Z of the sub-pixel is shown to simplify the description.

The substrate for liquid crystal display 2 includes the transparent pattern 5, the light-shielding pattern 6, the third electrode 13 as a transparent conductive film and the like. The array substrate 3 includes TFT elements (not illustrated), the first electrodes P1 to P3 in a comb-like pattern, the second electrodes C1 to C3 in a comb-like pattern and the like. The liquid crystal display device 1 is formed by the substrate for liquid crystal display 2 and the array substrate 3 being bonded together via the liquid crystal layer 4. The first electrodes P1 to P3 are connected to the TFT element to apply a drive voltage of the liquid crystals L1 to L7. The second electrodes C1 to C3 and the third electrode 13 are used as common electrodes. The second electrodes C1 to C3 are a second comb-like pattern disposed below the first electrodes P1 to P3 via the insulating layer 16c. The second electrodes C1 to C3 protrude in a direction toward an edge of a polygonal sub-pixel from the center axis Z dividing the polygonal sub-pixel into two portions in the vertical direction more than the corresponding first electrodes P1 to P3.

In FIG. 6, the initial alignment state of the liquid crystals L1 to L7 when no drive voltage is applied is illustrated. The liquid crystals L1 to L7 when no drive voltage is applied are aligned almost perpendicularly to the surface of the substrate for liquid crystal display 2 and the array substrate 3. However, in contrast to the liquid crystals L2 to L7 above the surface of the color filter 11, the liquid crystal L1 near the apex of the transparent pattern 5 is aligned with a pre-tilt angle because the liquid crystal L1 is aligned so as to be perpendicular to the inclination of the protruding portion 5a of the transparent pattern 5. The first electrodes P1 to P3 and the second electrodes C1 to C3 are formed as a comb-like pattern of a transparent conductive film.

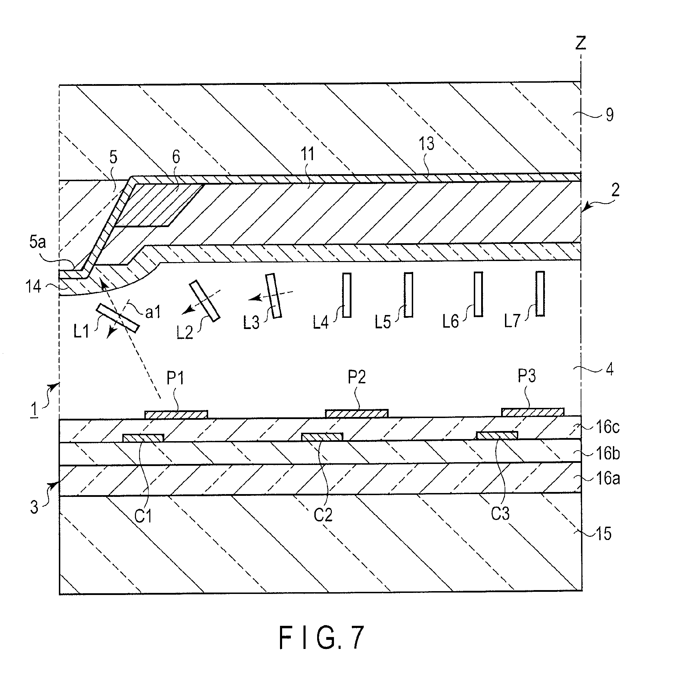

FIG. 7 is a partial sectional view showing an example of the liquid crystal display device 1 immediately after the drive voltage is applied. In FIG. 7, only the left side from the center axis Z of the sub-pixel is shown to simplify the description.

FIG. 7 shows an operation of the liquid crystals L1 to L7 immediately after the drive voltage is applied to the first electrodes P1 to P3. The liquid crystal L1 near the protruding portion 5a of the transparent pattern 5 has an inclination angle and inclines significantly in an arrow a1 direction fastest among the liquid crystals L1 to L7 near the surface of the substrate for liquid crystal display 2 because the inter-electrode distance between the first electrode P1 and the third electrode 13 is small. The other liquid crystals L2 to L7 near the surface of the substrate for liquid crystal display 2 start to incline in the same direction like propagation triggered by the inclination of the liquid crystal L1.

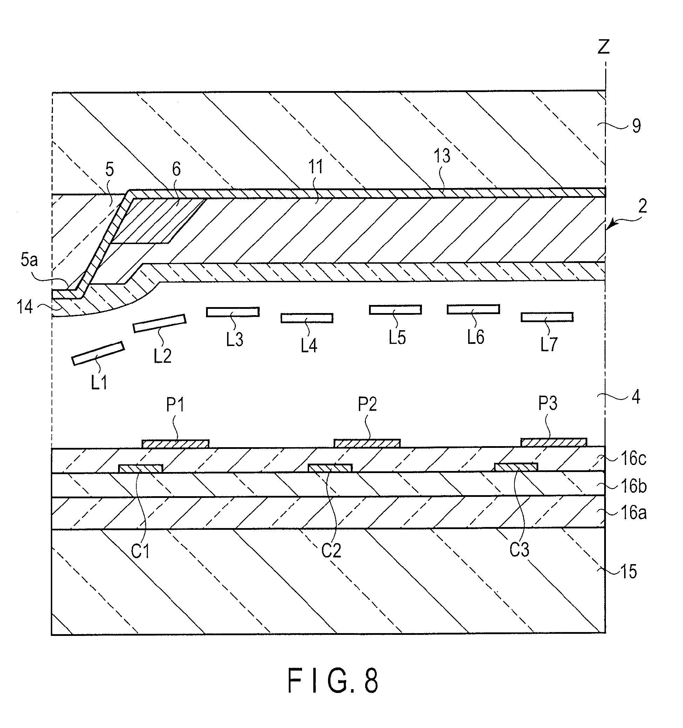

FIG. 8 is a partial sectional view showing an example of the liquid crystal display device 1 when some time passes after the drive voltage is applied. In FIG. 8, only the left side from the center axis Z of the sub-pixel is shown to simplify the description.

When some time passes after the drive voltage is applied to the first electrodes P1 to P3, the liquid crystals L1 to L7 incline in a state in accordance with a magnitude of the applied voltage.

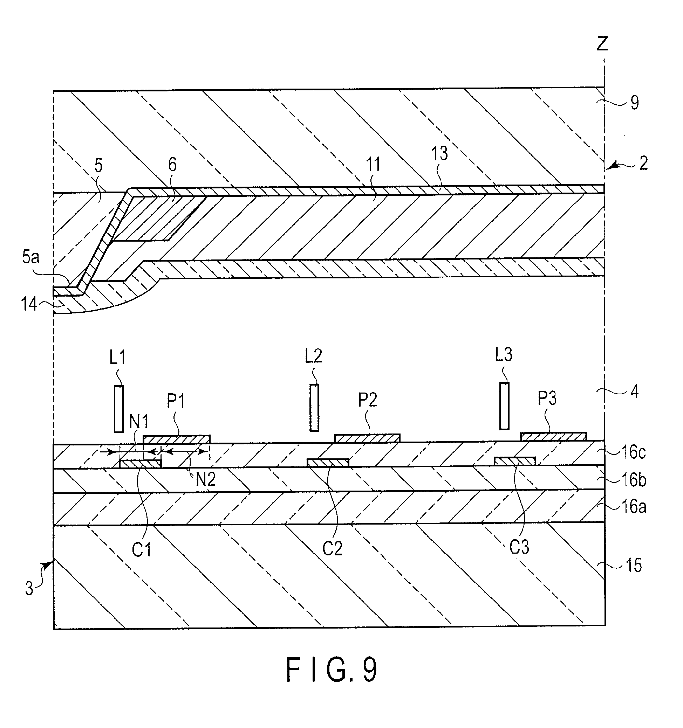

FIG. 9 is a partial sectional view showing an example of an action of the first electrodes P1 to P3 and the second electrodes C1 to C3 when no drive voltage is applied (initial alignment state) in the liquid crystal display device 1 according to the present embodiment.

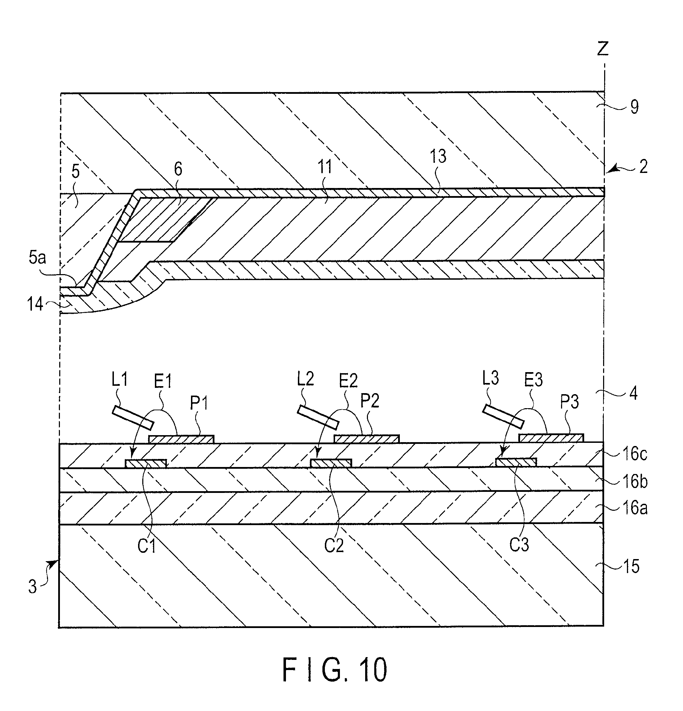

The first electrodes P1 to P3 in a comb-like pattern and the second electrodes C1 to C3 in a comb-like pattern are arranged via the insulating layer 16c. The second electrode C1 to C3 and the first electrodes P1 to P3 are shifted in the horizontal direction. In FIGS. 9 and 10, the second electrodes C1 to C3 and the first electrodes P1 to P3 are partially overlapped and the other portions protrude. In the horizontal direction, the second electrodes C1 to C3 are shifted to the side of the transparent pattern 5 more than the first electrodes P1 to P3.

The first electrodes P1 to P3 and the second electrodes C1 to C3 in a comb-like pattern are formed by electrically linking two linear conductors or more having the width of, for example, 2 µm to 20 µm. A linking portion of linear conductors may be formed for one side or both sides. The linking portion is preferably formed in a peripheral portion of a polygonal sub-pixel and outside an opening. The interval of a comb-like pattern is in the range of, for example, about 3 µm to 100 µm and is selected based on liquid a crystal cell condition and liquid crystal material. A formation density and pitch of a comb-like pattern and the electrode width can be changed inside a sub-pixel or a pixel. Protruding amounts N1, N2 of the first electrodes P1 to P3 and the second electrodes C1 to C3 in the horizontal direction can be adjusted in various ways by the material of the liquid crystals 4, the drive condition, the thickness of the liquid crystal cell, dimensions and the like. The protruding amounts N1, N2 are sufficient even in a small amount like any value of, for example, 1 µm to 6 µm. The overlapping portion can be used as an auxiliary capacity related to liquid crystal driving. The liquid crystals L1 to L3 are aligned almost perpendicularly to the surface of the array substrate 3. Thus, the number of teeth of a comb, density, and interval in an opening width direction of a sub-pixel or pixel in the first electrodes and second electrodes in a comb-like pattern can appropriately be adjusted in accordance with the size or purpose of use of the liquid crystal display device 1.

FIG. 10 is a partial sectional view showing an example of the action of the first electrodes P1 to P3 and the second electrodes C1 to C3 when the drive voltage is applied in the liquid crystal display device 1 according to the present embodiment.

When the drive voltage is applied to the first electrodes P1 to P3, electric flux lines E1 to E3 from the first electrodes P1 to P3 to the second electrodes C1 to C3 are generated. The liquid crystals L1 to L3 of the liquid crystal layer 4 instantaneously incline in the same direction so as to be perpendicular to the electric flux lines E1 to E3. The direction in which these liquid crystals L1 to L3 incline is the same as the direction in which the liquid crystals incline described in FIG. 7 and thus, liquid crystals of a sub-pixel or liquid crystals of a whole pixel quickly incline in the same direction at the same time.

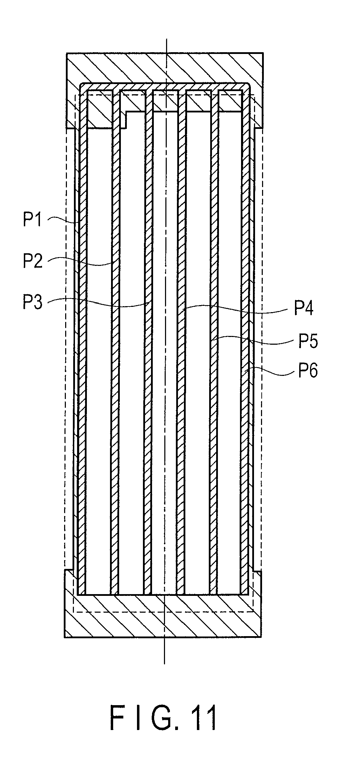

FIG. 11 is a partial plan view showing a first example of the first electrode included in the sub-pixel.

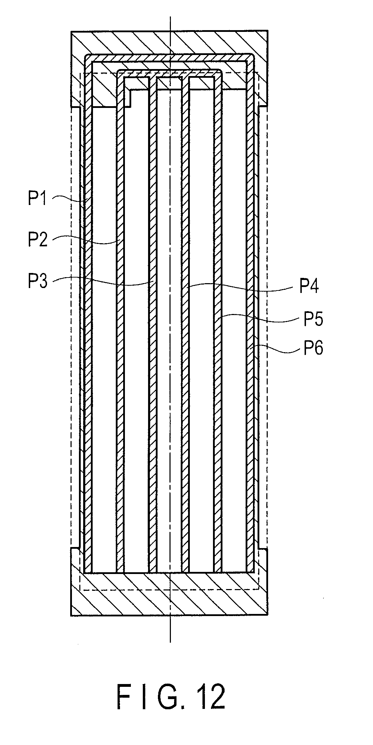

FIG. 12 is a partial plan view showing a second example of the first electrode included in the sub-pixel.

In FIGS. 11 and 12, the sub-pixel is formed in a rectangular shape and the first electrodes P1 to P3 in a comb-like shape are sides of the sub-pixel and parallel to two parallel sides opposite to each other.

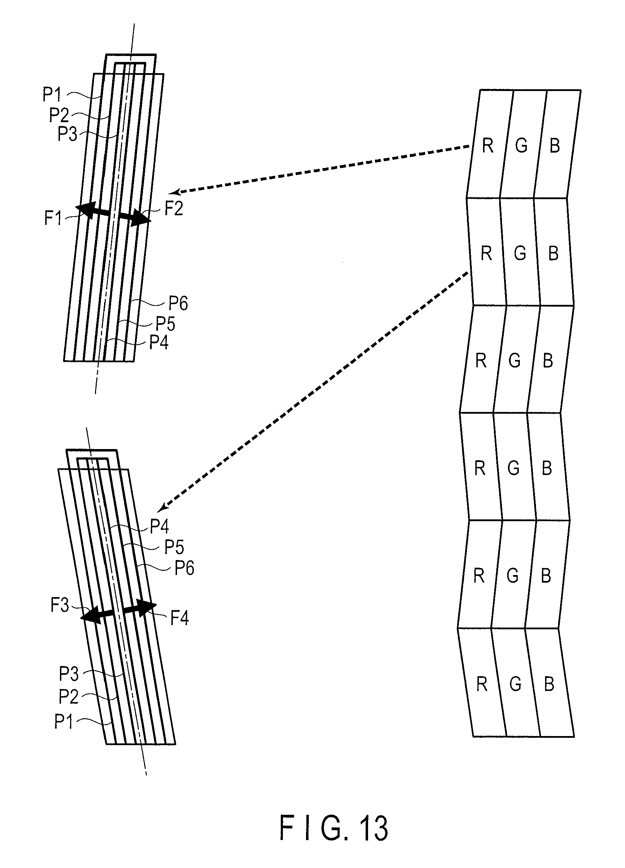

FIG. 13 is a partial plan view showing a third example of the first electrode included in the sub-pixel.

A red sub-pixel, a green sub-pixel, and a blue sub-pixel have a parallelogrammic shape. The red sub-pixel, the green sub-pixel, and the blue sub-pixel are arranged laterally. Sub-pixels of the same color are arranged lengthwise.

The first electrodes P1 to P6 in a comb-like shape are parallel to two parallel oblique lines opposite to each other in a sub-pixel in a parallelogrammic shape.

Arrows F1 to F4 indicate the directions in which the liquid crystals incline after the drive voltage is applied. After the drive voltage is applied, the liquid crystals incline in a direction perpendicular to the longitudinal direction of the first electrodes P1 to P6.

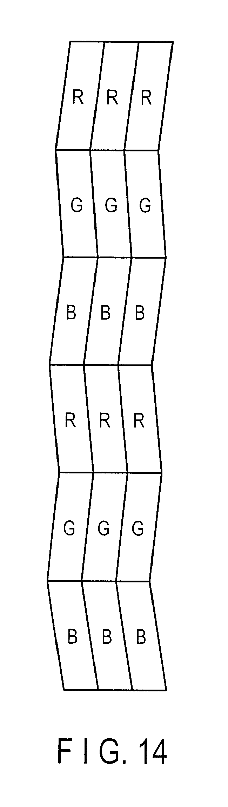

FIG. 14 is a partial plan view showing a modification of an arrangement of sub-pixels. Thus, sub-pixels of the same color are arranged laterally. The red sub-pixel, green sub-pixel, and blue sub-pixel are arranged lengthwise.

The electrode configuration or electrode arrangement shown in FIG. 6 or 9 may be made to have line symmetry with respect to the sub-pixel center, as shown in FIG. 1. By causing the electrode configuration or electrode arrangement to have line symmetry or point symmetry with respect to the sub-pixel center, liquid crystals can be made to incline in various directions so that a wide viewing angle can be secured.

In the present embodiment, pixel display TFT and viewing angle control TFT may be included in a pixel or a sub-pixel. In such a case, as shown in FIGS. 12 and 13, the first electrodes P1 to P6 as pixel electrodes can separately be connected to the pixel display TFT and viewing angle control TFT. For example, the first electrodes P1, P6 on edge sides of the sub-pixel are connected to the visual angle control TFT. The remaining first electrodes P2 to P5 are connected to the pixel display TFT. The first electrodes P1, P6 and the first electrodes P2 to P5 are electrically independent. Thus, by using a configuration in which the first electrodes P1, P6 are connected to the viewing angle control TFT and the first electrodes P2 to P5 are connected to the pixel display TFT, the viewing angle control by the skew light 8 can be executed independently of the pixel display so that the effect of the viewing angle control can materially be improved. In the normal pixel display with a wide viewing angle, a high-quality display with a wide viewing angle may be achieved by an oblique field effect from the first electrodes P2 to P5 connected to the pixel display TFT toward the third electrode 13 without, for example, the first electrodes P1, P6 connected to the viewing angle control TFT being driven (no drive voltage being applied). In addition, a streak width of the light-shielding pattern 6 made of a light-shielding layer such as a black matrix can be made thinner by forming a TFT element from an oxide semiconductor so that the aperture ratio of the liquid crystal display device 1 can be improved. In the present embodiment, it is preferable to apply the TFT element generated from the oxide semiconductor.

If TFT as an active element is formed from the oxide semiconductor, the aperture ratio of a sub-pixel or pixel can be improved. As a typical channel material of TFT from the oxide semiconductor, for example, a complex metal oxide of indium, gallium, and zinc called IGZO can be used.

A conductive metal oxide that is transparent in the visible range like ITO can be used as the material of the first electrodes P1 to P6 and the second electrodes C1 to C6 on the side of the array substrate 3 of the liquid crystal display device 1 according to the present embodiment. A metal whose electrical conductivity is higher than that of the metal oxide may also be used as the material of the first electrodes P1 to P6 and the second electrodes C1 to C6. In a reflection type or transflective type liquid crystal display device, a thin film of aluminum or aluminum alloy may be used for one or both of the first electrodes P1 to P6 and the second electrodes C1 to C6. The metal wire 17, the first electrodes P1 to P6, the second electrodes C1 to C6 and the like connected to active elements are formed for the substrate 15 via the insulating layers 16a to 16c made of silicon nitride (SiNx) or silicon oxide (SiOx). The thickness of the insulating layers 16a to 16c is set depending on the drive condition of the liquid crystals and selected in the range of, for example, 100 nm to 600 nm. Incidentally, the technology to form signal lines such as a gate wire and a source wire by using a single layer of an aluminum alloy having low contact properties for ITO as a conductive metal oxide is disclosed by, for example, Jpn. Pat. Appln. KOKAI Publication No. 2009-105424. Further stacking an insulating layer above the first electrodes P1 to P6 is preferable because of an effect of mitigating sticking (affected by biased or accumulated charges) of liquid crystals when the liquid crystals is driven.

In the present embodiment, the transparent pattern 5 protruding to the side of the liquid crystal layer 4 more than the light-shielding pattern 6 and the color filters 10 to 12 is formed. Accordingly, the thickness of the liquid crystal layer 4 below the transparent pattern 5 and the thickness of the liquid crystal layer 4 below the color filters 10 to 12 are different. The liquid crystal layer 4 below the transparent pattern 5 becomes thinner than the liquid crystal layer 4 below the color filters 10 to 12. Due to different thicknesses of the liquid crystal layer 4, the skew light 8 emitted from a portion of the linear pattern 7 may slightly be colored, but this does not cause any problem in terms of viewing angle control. The skew light 8 is emitted light close to bright white light rather than colored light of a green sub-pixel or the like (light having passed through a color filter) and so is suitable for viewing angle control.

Various technical terms in the present embodiment will be described below.

A matrix pattern is a light-shielding pattern disposed around a pixel (picture element) or sub-pixel as the minimum unit of display, on a side of a polygonal pixel or a polygonal sub-pixel to increase the contrast of the liquid crystal display. The matrix pattern may also be called a black matrix. In the present embodiment, a matrix pattern on at least two sides opposite to each other of a polygonal pixel or a polygonal sub-pixel are configured so that the linear transparent pattern 5 is sandwiched between the centers of the light-shielding patterns 6 in a plan view. The light-shielding layer is a light-shielding coated film obtained by dispersing a light-shielding pigment in a transparent resin and generally has photosensitivity. The light-shielding pattern 6 is generated by forming a light-shielding layer by photolithography including exposure and development as a pattern. The transparent pattern 5 is generated by forming a transparent resin or acryl resin as a pattern. The transparent pattern 5 may contain a small amount of pigment, ultraviolet absorber, or infrared absorber. The transparent pattern 5 is formed from a transparent resin having high transmittance in the visible range. Either the light-shielding pattern 6 or the transparent pattern 5 may be formed first as the formation order.

A polygonal pixel or a polygonal sub-pixel means a plan view shape of a picture element or sub-pixel and means a pixel or sub-pixel of a polygon in which sides opposite to each other are parallel like a rectangle, a parallelogram and a "<" formed dogleg-shaped polygon.

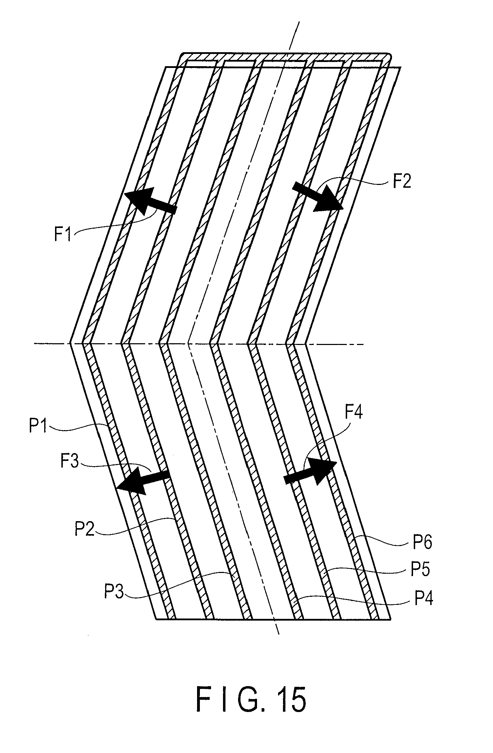

FIG. 15 is a plan view showing an example of the relationship between a polygonal sub-pixel and the first electrodes P1 to P6.

In a "<" formed dogleg-shaped polygonal sub-pixel, sides are bent. The first electrodes P1 to P6 are bent near a center lengthwise along the sides. Thus, directions F1 to F4 in which liquid crystals incline are different in four quadrants obtained by dividing the "<" formed dogleg-shaped polygonal sub-pixel by the lengthwise center axis and the lateral center axis.

If the emission direction of the skew light 8 in viewing angle control is taken into consideration, the plane shape of a sub-pixel is preferably the "<" formed dogleg-shaped polygon shown in FIG. 15 or a combination of parallelograms shown in FIGS. 13 and 14. Particularly when characters are displayed in a liquid crystal display screen, visibility of third parties can be decreased by applying parallelogrammic sub-pixels in FIGS. 13 and 14 in which the emission direction changes for each constituent sub-pixel in the character display. When two active elements are formed for each sub-pixel and first electrodes for display and first electrodes for viewing angle control are driven by respective active elements, the contribution of pixel formation factors decreases slightly. This is because the skew light 8 can be controlled in this case separately from the display by first electrodes for viewing angle control. Further in this case, visibility of the skew light 8 by third parties is decreased by using first electrodes for viewing angle control and so a drive voltage signal may be randomized or the shape/arrangement of the transparent pattern 5 may be randomized.

A color layer refers to a coated film of coloring composition obtained by dispersing organic pigments in a transparent resin. A color layer formed so as to overlap with a portion of a light-shielding pattern by a known photolithography technique is called a color pixel. In the present embodiment, color pixels include a red sub-pixel, green sub-pixel, and blue sub-pixel. The effective size of each sub-pixel is approximately the same as the size of an opening of a matrix pattern.

In the present embodiment, the relative dielectric constant of a color layer is a relatively important property and is almost uniquely determined by the ratio (color reproduction as a color filter) of an organic pigment added as a coloring agent to the transparent resin and thus, it is difficult to materially change the relative dielectric constant of the color layer. In other words, the type and content of organic pigment in the color layer are set based on necessary color purity as a liquid crystal display device and also the relative dielectric constant of the color layer is almost determined by the settings. The relative dielectric constant can be increased to 4 or more by increasing the ratio of organic pigments and making the color layer thinner. The relative dielectric constant can slightly be increased by using a material of high refractive index as the transparent resin. The relative dielectric constant of the color layer using an organic pigment is generally set to the range of 2.9 to 4.5. Values of the relative dielectric constants of color sub-pixels of different colors may be set so that their difference is within ±0.3 to avoid color unevenness and light leakage in the liquid crystal display. If the difference of relative dielectric constants between color sub-pixels exceeds 0.8 or 1.0 in the liquid crystal display device 1 in a drive method according to the present embodiment or an FFS (Fringe-Field Switching) method, color unevenness or light leakage may occur in the liquid crystal display. The relative dielectric constant of a color sub-pixel can be reduced to 4.4 or less by the selection of organic pigment as a coloring agent and the ratio of pigment and also the selection of the resin as a base material and the material such as a dispersion material. A zinc halide phthalocyanine green pigment is preferable to a copper halide phthalocyanine green pigment as an organic pigment of a green sub-pixel. The relative dielectric constant of a green sub-pixel can be decreased by adopting the zinc halide phthalocyanine green pigment as the coloring agent of the green sub-pixel, which makes it easier to bring the relative dielectric constant of a green sub-pixel closer to the relative dielectric constant of a red sub-pixel or the relative dielectric constant of a blue sub-pixel. When the startup of the liquid crystals in liquid crystal driving is fast on the shorter wavelength side (blue sub-pixel) and slow on the longer wavelength side (red sub-pixel), the size of the relative dielectric constant of a color sub-pixel can be adjusted in the order of the wavelength of light. Conditions that do not interfere with liquid crystal driving can be obtained by making the value of the relative dielectric constant of a color filter constituent member smaller than the value of dielectric constant anisotropy Δε of the liquid crystals used for the liquid crystal display device 1. For the formation of the color filter, a photosensitive acryl resin is generally used. In general, the relative dielectric constant of a transparent resin such as an acryl resin is about 2.8. In the present embodiment, the lower limit of the relative dielectric constant of a color sub-pixel as a dispersed system of organic pigments is set to about 2.9.

In the present embodiment described above, viewing angle control of the liquid crystal display device can be realized. In the present embodiment, the liquid crystal display device can be prevented from becoming heavy and thick and the aperture ratio can be prevented from decreasing so that the viewing angle control can be executed.

### (Second embodiment)

In the present embodiment, examples of various materials of the transparent resin, organic pigments and the like of the substrate for liquid crystal display 2 according to the first embodiment described above will be described.

### <Transparent resin>

A photosensitive coloring composition used to form a light-shielding layer or color layer further contains, in addition to a pigment dispersing element, a polyfunctional monomer, photosensitive resin or non-photosensitive resin, polymerization initiator, solvent and the like. An organic resin with high transparency used in the present embodiment like a photosensitive resin or non-photosensitive resin is called a transparent resin.

The transparent resin includes a thermoplastic resin, thermosetting resin, or photosensitive resin. As the thermoplastic resin, for example, a butyral resin, styrene-maleic acid copolymer, chlorinated polyethylene, chlorinated polypropylene, polyvinyl chloride, vinyl chloride-vinyl acetate copolymer, polyvinyl acetate, polyurethane resin, polyester resin, acrylic resin, alkyd resin, polystyrene resin, polyamide resin, rubber-based resin, cyclized rubber-based resin, celluloses, polybutadiene, polyethylene, polypropylene, polyimide resin or the like is used. As the thermosetting resin, for example, an epoxy resin, benzoguanamine resin, rosin modified maleic acid resin, rosin modified fumaric acid resin, melamine resin, urea resin, phenol resin or the like is used. A material obtained by allowing a melamine resin to react with a compound containing an isocyanate group may be used as the thermosetting resin.

### <Alkali soluble resin>

For the formation of a light-shielding pattern 6, a transparent pattern 5, and a color sub-pixel used in the present embodiment, it is preferable to use a photosensitive resin composition from which a pattern can be formed by photolithography. Such a transparent resin is preferably a resin having alkali solubility. A resin containing a carboxyl group or hydroxyl group may be used as the alkali soluble resin. As the alkali soluble resin, for example, an epoxy acrylate resin, novolac resin, polyvinyl phenol resin, acrylic resin, epoxy resin containing a carboxyl group, urethane resin containing a carboxyl group or the like is used. Among others, the epoxy acrylate resin, novolac resin, and acrylic resin are preferable and the epoxy acrylate resin and novolac resin are particularly preferable.

### <Acrylic resin>

As a typical transparent resin according to the present embodiment, the following acrylic resins can be illustrated.

As the acrylic resin, a polymer obtained by using, for example, as a monomer, (meta)acrylic acid; alkyl (meta)acrylate such as methyl (meta)acrylate, ethyl (meta)acrylate, propyl (meta)acrylate, butyl (meta)acrylate, t-butyl (meta)acrylate, benzyl (meta)acrylate, and lauryl (meta)acrylate; (meta)acrylate containing a hydroxyl group such as hydroxylethyl (meta)acrylate and hydroxylpropyl (meta)acrylate; (meta)acrylate containing an ether group such as ethoxyethyl (meta)acrylate and glycidyl (meta)acrylate; and alicyclic (meta)acrylate such as cyclohexyl (meta)acrylate, isobornyl (meta)acrylate, and dicyclopentenyl (meta)acrylate is used.

The above monomers can be used alone or by combining two or more monomers. As the acrylic resin according to the present embodiment, a copolymer of these monomers and a compound that can be copolymerized with these monomers such as styrene, cyclohexyl maleimide, and phenyl maleimide may be used.

To obtain a resin having photosensitivity, carboxylic acid having an ethylene unsaturated group like, for example, (meta)acrylic acid may be copolymerized to allow the obtained copolymer to react with a compound containing an epoxy group and unsaturated double bond such as glycidyl methacrylate. Also to obtain a resin having photosensitivity, a compound containing carboxylic acid such as (meta)acrylic acid may be added to a polymer of (meta)acrylate containing an epoxy group such as glycidyl methacrylate or a copolymer of the polymer and other (meta)acrylate.

### <Organic pigment>

As the red pigment, for example, C. I. Pigment Red 7, 9, 14, 41, 48:1, 48:2, 48:3, 48:4, 81:1, 81:2, 81:3, 97, 122, 123, 146, 149, 168, 177, 178, 179, 180, 184, 185, 187, 192, 200, 202, 208, 210, 215, 216, 217, 220, 223, 224, 226, 227, 228, 240, 242, 246, 254, 255, 264, 272, 279 or the like may be used.

As the yellow pigment, for example, C. I. Pigment Yellow 1, 2, 3, 4, 5, 6, 10, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 144, 146, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, 214 or the like may be used.

As the blue pigment, for example, C. I. Pigment Blue 15, 15:1, 15:2, 15:3, 15:4, 15:6, 16, 22, 60, 64, 80 or the like may be used and among others, C. I. Pigment Blue 15:6 is preferable.

As the purple pigment, for example, C. I. Pigment Violet 1, 19, 23, 27, 29, 30, 32, 37, 40, 42, 50 or the like may be used and among others, C. I. Pigment Violet 23 is preferable.

As the green pigment, for example, C. I. Pigment Green 1, 2, 4, 7, 8, 10, 13, 14, 15, 17, 18, 19, 26, 36, 45, 48, 50, 51, 54, 55, 58 or the like may be used and among others, C. I. Pigment Green 58 as a zinc halide phthalocyanine green pigment is preferable.

In the description of the pigment type of C. I. Pigment below, simple abbreviations like PB (Pigment Blue), PV (Pigment Violet), PR (Pigment Red), PY (Pigment Yellow), and PG (Pigment Green) will be used.

### <Coloring material of the light-shielding layer>

A light-shielding coloring material contained in a light-shielding layer or matrix pattern realizes a light-shielding function by having absorption characteristics in the visible light wavelength range. In the present embodiment, for example, an organic pigment, inorganic pigment, dye or the like is used as the light-shielding coloring material. As the inorganic pigment, for example, carbon black, titanium oxide or the like is used. As the dye, for example, an azo-based dye, anthraquinone-based dye, phthalocyanine-based dye, quinoneimine-based dye, quinoline-based dye, nitro-based dye, carbonyl-based dye, methine-based dye or the like is used. Regarding the organic pigment, the organic pigments described above may be used. One type of light-shielding component may be used or two types or more of light-shielding components in any combination and ratio may be used. Moreover, high volume resistivity may be achieved by resin coating on the surface of these coloring materials. Conversely, low volume resistivity may be achieved by increasing the ratio of coloring material content to the base material of the resin to provide slight conductivity. The volume resistance of such light-shielding materials is in the range of about 1×10⁸ to 1×10¹⁵Ω·cm, which is a level that does not affect the resistance of a transparent conductive film. Similarly, the relative dielectric constant of a light-shielding layer can be adjusted to the range of about 3 to 20 by the selection of coloring material or the ratio of content. The relative dielectric constants of the light-shielding pattern 6, the transparent pattern 5, color layers (color filters 10 to 12), and a protective layer 14 can be adjusted by based on at least one of design conditions of a liquid crystal display device 1 and drive conditions of the liquid crystal.

### <Dispersant/dispersing agent>

Using a macromolecular dispersant as a pigment dispersant is preferable due to superior dispersion stability over time. As the macromolecular dispersant, for example, a urethane-based dispersant, polyethyleneimine-based dispersant, polyoxyethylene alkylether-based dispersant, polyoxyethylene glycoldiester-based dispersant, sorbitan aliphatic ester-based dispersant, aliphatic modified polyester-based dispersant or the like can be used. Particularly, it is preferable to use a dispersant containing a graft copolymer containing nitrogen atoms for a light-shielding photosensitive resin composition containing a large amount of pigment from the viewpoint of development properties. One type of dispersant may be used or two types or more of dispersants in any combination and ratio may be used.

As the dispersing agent, for example, a coloring matter derivative or the like can be used. As the coloring matter derivative, for example, an aso-based, phthalocyanine-based, quinacridone-based, benzimidazolone-based, quinophthalone-based, isoindolynone-based, dioxazine-based, anthraquinone-based, indanthrene-based, perylene-based, perynone-based, or diketopyrrolopyrrole-based derivative may be used and particularly, the quinophthalone-based derivative is preferable.

As the substituent group of a coloring matter derivative, for example, the sulfonic group, sulfonamide group and quaternary salt thereof, phthalimide methyl group, dialkylamino alkyl group, hydroxyl group, carboxyl group, amide group or the like is contained directly in a pigment skeleton or a substance bonded via the alkyl group, aryl group, heterocyclic group or the like is contained. Among others, the sulfonic group is preferable. In addition, among these substituent groups, a plurality of substituent groups may be substituted for a pigment skeleton.

Concrete examples of the coloring matter derivative include a sulfonic acid derivative of phthalocyanine, sulfonic acid derivative of quinophthalone, sulfonic acid derivative of anthraquinone, sulfonic acid derivative of quinacridone, sulfonic acid derivative of diketopyrrolopyrrole, and sulfonic acid derivative of dioxazine.

One type of the above dispersing agent or coloring matter derivative may be used or two types or more of the above dispersing agents or coloring matter derivatives in any combination and ratio may be used.

### (Third embodiment)

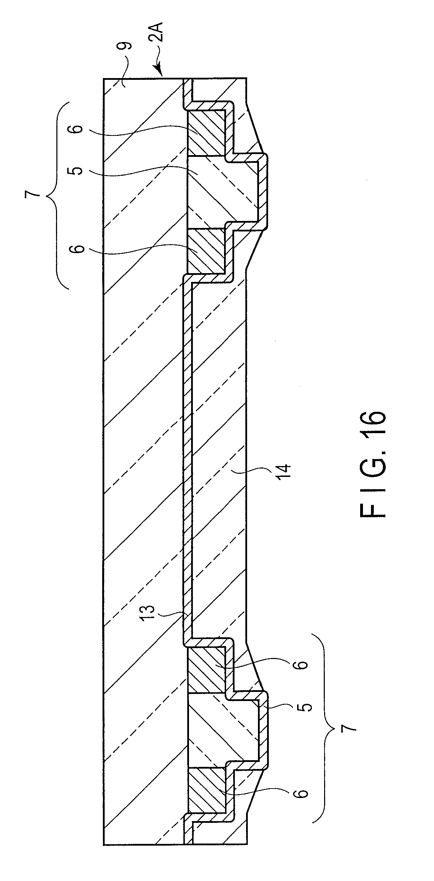

In the present embodiment, an example of the method for manufacturing a substrate for liquid crystal display 2A shown in FIG. 16 will be described. FIG. 16 is illustrated by setting a substrate 9 of the substrate for liquid crystal display 2A as the upper side and a protective layer 14 as the lower side.

### <Formation of a light-shielding pattern 6>

### (Dispersion liquid for the light-shielding pattern 6 formation)

20 mass parts of the carbon pigment #47, 8.3 mass parts of a macromolecular dispersant, 1.0 mass part of a copper phthalocyanine derivative, and 71 mass parts of propylene glycol monomethyl ether acetate are stirred by a bead mill dispersion machine to generate a carbon black dispersion liquid.

### (Photoresist for forming the light-shielding pattern 6)

A resist for forming the light-shielding pattern 6 as the material for a light-shielding layer is generated by using the following materials:
Carbon black dispersion liquid: Pigment #47
Transparent resin (Solid content: 56.1% by mass)
Photopolymeric monomer
Initiator
Solvent: Propylene glycol monomethyl ether acetate, ethyl-3-ethoxypropionate
Leveling agent

The resist for forming the light-shielding pattern 6 (pigment concentration in solid content: about 20%) is generated by mixing and stirring the above materials in the following composition ratio:
Carbon black dispersion liquid 3.0 mass parts
Transparent resin 1.4 mass parts
Photopolymeric monomer 0.4 mass parts
First photopolymerization initiator 0.67 mass parts
Second photopolymerization initiator 0.17 mass parts
Propylene glycol monomethyl ether acetate 14 mass parts
Ethyl-3-ethoxypropionate 5.0 mass parts
Leveling agent 1.5 mass parts

### (Light-shielding pattern formation conditions)

A resist for forming the light-shielding pattern 6 is spin-coated on the transparent substrate 9 as non-alkali glass and dried to form a coated film of 1.5 µm in thickness. After the coated film is dried at 100°C for 3 min, irradiation of 200 mJ/cm² is performed by using a photo mask for exposure and a super-high pressure mercury lamp as a light source.

Next, the coated film is developed for 60 sec in a 2.5% sodium carbonate solution, washed well after the development, and dried before being treated with heat at 230°C for 60 min for hardening to form the light-shielding pattern 6. The streak width of the light-shielding pattern 6 shown in FIG. 16 is about 8 µm on one side and the light-shielding pattern 6 is formed on two sides of a rectangular pixel.

### <Formation of the transparent pattern>

### (Resin A synthesis)

686 mass parts of propylene glycol monomethyl ether acetate, 332 mass parts of glycidyl methacrylate, and 6.6 mass parts of azobisisobutyronitrile are added to a separable flask and the flask is heated at 80°C for 6 hours under a nitrogen atmosphere to generate a resin solution.

Next, 168 mass parts of acrylic acid, 0.05 mass parts of methoquinone, and 0.5 mass parts of triphenylphosphine are added to the obtained resin solution and the resin solution is heated at 100°C for 24 hours while the air is blown into the flask to purify the acrylic acid added resin solution.

Further, 186 mass parts of tetrahydrophthalic anhydride to the obtained acrylic acid added resin solution and the solution is heated at 70°C for 10 hours to generate a resin A solution.

### (Preparation of a photosensitive resin liquid AA)

The negative type photosensitive resin liquid AA is generated with the following composition:
Resin A 200 mass parts
Photopolymeric monomer
Dipentaerythritol hexaacrylate 100 mass parts
Photopolymerization initiator 100 mass parts
Solvent (propylene glycol monomethyl ether acetate) 380 mass parts

The photosensitive resin liquid AA and a photo mask having a transparent pattern 5 (opening) are used to form the transparent pattern 5 of the width 18 µm between the light-shielding patterns 6 of the width 8 µm shown in FIG. 1 on the transparent substrate 9 by a publicly known photolithography method so that a linear pattern 7 of the width 34 µm and a matrix pattern are generated. The height (thickness) of the transparent pattern 5 is set to, for example, 3.2 µm.

### <Formation of the third electrode/transparent conductive film>

A transparent conductive film that is transparent in the visible range like ITO (thin film of metallic oxide indium/tin) is formed as a third electrode 13 to a thickness of 0.14 µm so as to cover the entire surface of the linear pattern 7 and the matrix pattern by using a sputtering device.

### <Formation of the protective layer>

### (Resin B synthesis)

800 parts of cyclohexane are placed in a reaction vessel and the vessel is heated while a nitrogen gas is injected thereinto and a mixture of monomers and a thermal polymerization initiator described below is dropped to allow a polymerization reaction.
Styrene 60 mass parts
Methacrylic acid 60 mass parts
Methyl methacrylate 65 mass parts
Butyl methacrylate 65 mass parts
Thermal polymerization initiator 10 mass parts
Chain transfer agent 3 mass parts

After sufficient heating after the mixture is dropped, a material produced by dissolving 2.0 mass parts of the thermal polymerization initiator in 50 mass parts of cyclohexane is added and further the reaction is continued to generate an acrylic resin solution.

The acrylic resin solution is prepared by adding cyclohexane to the resin solution so that the solid content becomes 20% by mass to generate the resin B.

The average molecular weight by weight of acrylic resin is assumed to be about 10000.

### (Resin coating liquid BB)

After a mixture of the following composition is stirred and mixed uniformly, the mixture is dispersed in a sand mill by using a glass bead whose diameter is 1 mm for 5 hours and then filtered by using a filter of 1 µm to generate the resin coating liquid BB.
Resin B 150 mass parts
Polyfunctional polymeric monomer 20 mass parts
Optical initiator 16 mass parts
Cyclohexane 250 mass parts

The protective layer 14 is coated so as to cover the entire surface of the third electrode 13 by using the resin coating liquid BB and dried. Next, a photo mask having a light-shielding pattern in the same shape as that of the transparent pattern 5 is used for exposure/development to remove the protective layer 14 in the upper portion of the transparent pattern 5. Then, the protective layer 14 is hardened by total surface re-exposure and heat treatment to form the substrate for liquid crystal display 2A. The film thickness of the protective layer 14 after hardening is 2.0 µm in the center of a polygonal sub-pixel. The difference between the height of the surface of the third electrode 13 of a polygonal sub-pixel at the apex of the linear pattern 7 and the height of the surface of the protective layer 14 in the center of the sub-pixel is set to be about 1.2 µm.

The substrate for liquid crystal display 2A can be applied to a monochrome liquid crystal display device, but can also make a color display by using, for example, individual light emitting LED elements such as red, green, and blue as a backlight and applying the field sequential method.

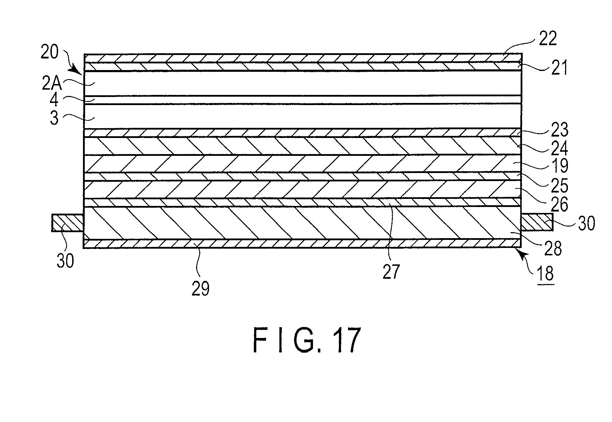

FIG. 17 is a sectional view showing an example of a configuration of an edge light type liquid crystal display device.

In FIG. 17, a case when a liquid crystal display device 18 includes the substrate for liquid crystal display 2A is illustrated, but a case when a substrate for liquid crystal display 2 is included is similar.

The liquid crystal display device 18 is a transflective type liquid crystal display device using a reflecting-polarizing plate 19.

As described in the first embodiment, a substrate for liquid crystal display 20 includes an array substrate 3 on which active elements (TFT) are formed. The array substrate 3 includes, for example, first and second electrodes in a comb-like shape. The substrate for liquid crystal display 2A and the array substrate 3 are arranged opposite to each other and provided together via the liquid crystal layer 4 therebetween. The liquid crystal layer 4 has negative dielectric constant anisotropy. An optical compensation layer (phase difference plate) 21 and a polarizing plate 22 are arranged on the surface (back side) of the substrate for liquid crystal display 2A on the side opposite to the liquid crystal layer 4. Also, a polarizing plate 23, a light diffusion layer 24, the reflecting-polarizing plate 19, an optical compensation layer (phase difference plate) 25, a prism sheet 26, a light diffusion layer 27, a light guiding plate 28, and a light reflection plate 29 are successively disposed on the surface (back side) of the array substrate 3 opposite to the liquid crystal layer 4. A light source 30 like, for example, an LED is mounted on the light guiding plate 28. As the polarizing plates 22, 23, for example, the cross Nicole arrangement is used.

RGB individual light emitting elements are desirable as the light source 30, but a pseudo-white LED may also be used when individual RGB light emitting elements are not controlled by the field sequential method. In addition, a cold cathode ray tube or fluorescent lamp may also be used as the light source 30. When RGB individual light emitting elements are used as the light source 30, each light emitting intensity can individually be adjusted for each color, sub-pixel, and pixel so that the optimal color display can be made and the color display can be made by time division driving synchronized with the liquid crystals without using any color filter. In addition, the RGB individual light emitting elements can be applied to the stereoscopic display. In the liquid crystal display device 18, the local dimming method as a technology to improve the contrast by adjusting brightness of the backlight in each portion of the display screen may be applied. The technique of local dimming is easier to apply to an LED light source. In the present embodiment, improved image quality can be obtained by combining the use of a normal display region and a dynamic display region.

When the color display is made by individual light emission, a high-quality display can be made with fine control by a direct backlight system in which LED elements are arranged all over the back side (back side of the array substrate) of the liquid crystal display device rather than an edge light system as shown in FIG. 17.

Incidentally, the polygonal sub-pixel of a liquid crystal display device according to the present embodiment can be divided into regions (two or four regions dividing the sub-pixel) having line symmetry or point symmetry with respect to the sub-pixel center on a plane. In the present embodiment, individual TFT elements may be allocated to two or four regions having line symmetry or point symmetry in the sub-pixel. Then, by using the drive method by which different voltages are applied to each of the TFT elements in the sub-pixel, visual angle adjustments and a stereoscopic display can be made efficiently.

### (Fourth embodiment)

In the present embodiment, an example of the method for manufacturing a substrate for liquid crystal display 2 shown in FIG. 2 will be described. FIG. 2 is illustrated by setting a substrate 9 of the manufactured substrate for liquid crystal display 2 as the upper side and a protective layer 14 as the lower side.

In the present embodiment, the manufacturing process until a linear pattern 7 and a third electrode 13 are formed on the substrate 9 is the same as the case described in the third embodiment.

In the present embodiment, various color filters such as the red color filter 10, the green color filter 11, and the blue color filter 12 are successively formed by using a coloring dispersion liquid described later and a color resist of the composition shown in Table 1 above the substrate on which up to the third electrode 13 is formed.

**Table 1**

| Color resist | For red pixel | For green pixel | For blue pixel |
|---|---|---|---|
| Pigment dispersion liquid (Mass parts) | Red dispersion liquid 51 | Green dispersion liquid 52 | Blue dispersion liquid 42 |
| Acrylic resin solution | 1 | 0 | 10 |
| Monomer | 4 | 4.8 | 5.6 |
| Photopolymerization initiator | 3.4 | 2.8 | 2 |
| Sensitizer | 0.4 | 0.2 | 0.2 |
| Organic solvent | 40.2 | 40.2 | 40.2 |
| Total | 100 | 100 | 100 |

### <Formation of color filters>

### (Dispersion liquid for color layer formation)

For example, the following pigments are used as organic pigments dispersed to the color layer.
Red pigment: C. I. Pigment Red 254, C. I. Pigment Red 177
Green pigment: C. I. Pigment Green 58, C. I. Pigment Yellow 150
Blue pigment: C. I. Pigment Blue 15, C. I. Pigment Violet 23
By using the above pigments, the dispersion liquid of each color of red, green, and blue is generated.

### (Red dispersion liquid)

Red pigment: C. I. Pigment Red 254 18 mass parts
Red pigment: C. I. Pigment Red 177 2 mass parts
Acrylic varnish (solid content: 20% by mass) 108 mass parts

After a mixture of the above composition is stirred uniformly, the mixture is dispersed in a sand mill by using a glass bead for 5 hours and then filtered by using a filter of 5 µm to generate a red dispersion liquid.

### (Green dispersion liquid)

Green pigment: C. I. Pigment Green 58 16 mass parts
Green pigment: C. I. Pigment Yellow 150 8 mass parts
Acrylic varnish (solid content: 20% by mass) 102 mass parts

A green dispersion liquid is generated by applying the generation method for a red dispersion liquid to a mixture of the above composition.

### (Blue dispersion liquid)

Blue pigment: C. I. Pigment Blue 15 50 mass parts
Blue pigment: C. I. Pigment Violet 23 2 mass parts
Dispersant 6 mass parts
Acrylic varnish (solid content: 20% by mass) 200 mass parts

A blue dispersion liquid is generated by applying the generation method for a red dispersion liquid to a mixture of the above composition.

### <Manufacture of the substrate for liquid crystal display 2 after the color layer formation>

It is assumed that the thickness of each color pixel is 2 µm after exposure/development and hardening. A photo mask of, for example, a gray tone with low transmittance is used for exposure to form a pigment layer so that the color layer on the light-shielding pattern 6 in a portion of the linear pattern 7 should not become too thick.

Next, the viscosity of a resin coating liquid BB used for the formation of the protective layer 14 is controlled and the resin coating liquid BB is coated and hardened to a thickness of, for example, 0.5 µm to generate the substrate for liquid crystal display 2. The difference in height from the surface of the apex of the linear pattern 7 to the surface of the protective layer 14 in the pixel center is assumed to be about 0.6 µm. Accordingly, as shown in the partial plan view of FIG. 3, the red color filter 10, the green color filter 11, the blue color filter 12, a transparent pattern 5, and the light-shielding pattern 6 are formed.

### (Fifth embodiment)

In the present embodiment, actions of viewing angle control of a liquid crystal display device 1 or a liquid crystal display device 18 described in each of the above embodiments will be described. In the present embodiment, the description will be provided about the liquid crystal display device 1 including a substrate for liquid crystal display 2 shown in FIG. 1, but the description is similar about the liquid crystal display device 1 or the liquid crystal display device 18 including a substrate for liquid crystal display 2A.

The liquid crystal display device 1 has a configuration in which the substrate for liquid crystal display 2 and an array substrate 3 on which active elements as TFT are formed are provided together via a liquid crystal layer 4. The liquid crystal layer 4 has a vertical alignment film formed in advance on the front side of both of the substrate for liquid crystal display 2 and the array substrate 3. First electrodes P1 to P6 of the array substrate 3 form a comb-like pattern. An insulating layer 16c is formed between the first electrodes P1 to P6 and second electrodes C1 to C6 as common electrodes. The second electrodes C1 to C6 protrude in the direction toward a transparent pattern 5 from the first electrodes P1 to P6 in the horizontal direction. As shown in FIGS. 11 to 13, and FIG. 15, the electrode pattern of the first electrodes P1 to P6 and the second electrodes C1 to C6 has line symmetry with respect to the plane center of a polygonal sub-pixel.

As shown in FIG. 1, a metal wire 17 as a signal line of TFT is disposed below the transparent pattern 5. Thus, light from the backlight does not enter the eye of an observer who looks straight at the liquid crystal display device 1. Though omitted in FIG. 1, a backlight unit is disposed, for example, below on the side of the array substrate 3 of the liquid crystal display device in FIG. 1.

FIG. 1 shows a state in which no drive voltage of liquid crystals L1 to L14 is applied and a color filter (green color filter 11) unit makes a "black display". However, the liquid crystal L3 in an inclined portion (protruding portion 5a) of a linear pattern 7 has an inclination with respect to skew light 8 and thus, the skew light 8 is emitted from the transparent pattern 5 to prevent visual recognition of "black display" in the eye of a third party.

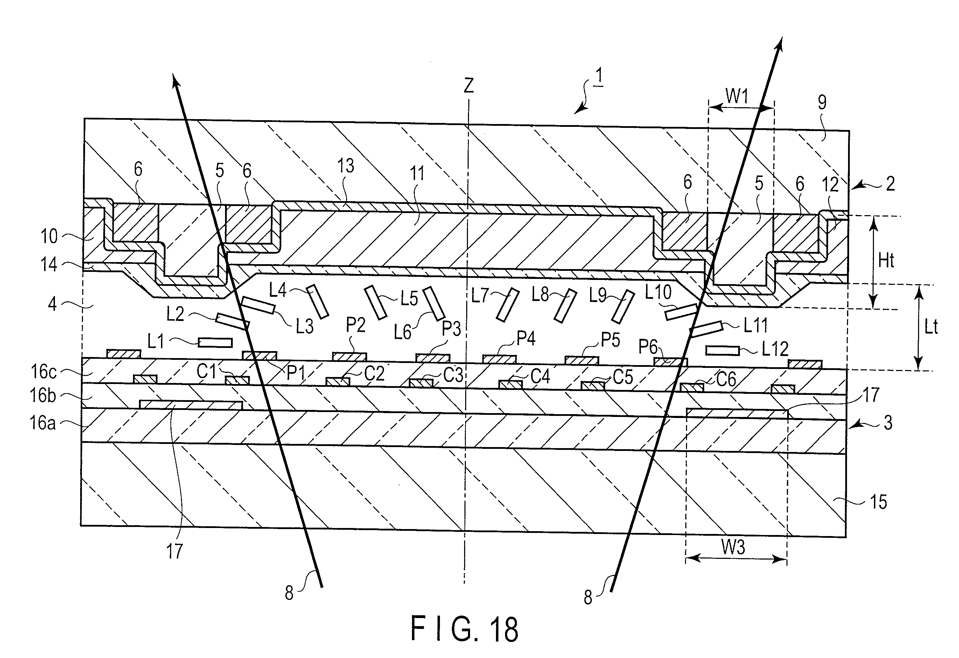

FIG. 18 is a partial sectional view showing an example of the liquid crystal display device 1 in halftone display after the drive voltage is applied. FIG. 18 illustrates a state in which the drive voltage is applied to the liquid crystal display device 1 in FIG. 1.

An observer can visually recognize halftone green light from the display unit as the green color filter 11. The skew light 8 as intensive white light is emitted from the transparent pattern 5. The skew light 8 prevents a third party from visually recognizing light from the green color filter 11. Because the electrode distance between the third electrode 13 at the apex of the transparent pattern 5 and the first electrode P1 is small, the liquid crystals L1 to L3 located at the position incline significantly when the drive voltage is applied. Thus, the skew light 8 as intensive white light is emitted from the transparent pattern 5.

Accordingly, viewing angle control can be executed without making the liquid crystal display device 1 thicker and further without decreasing aperture ratio so that visual recognition by third parties other than the observer can be prevented.

### (Sixth embodiment)

In the present embodiment, a modification of a liquid crystal display device 1 or a liquid crystal display device 18 described in each of the above embodiments will be described. In the present embodiment, the description will be provided about a modification of the liquid crystal display device 1 including a substrate for liquid crystal display 2 shown in FIG. 1, but the liquid crystal display device 1 or the liquid crystal display device 18 including a substrate for liquid crystal display 2A can similarly be modified.

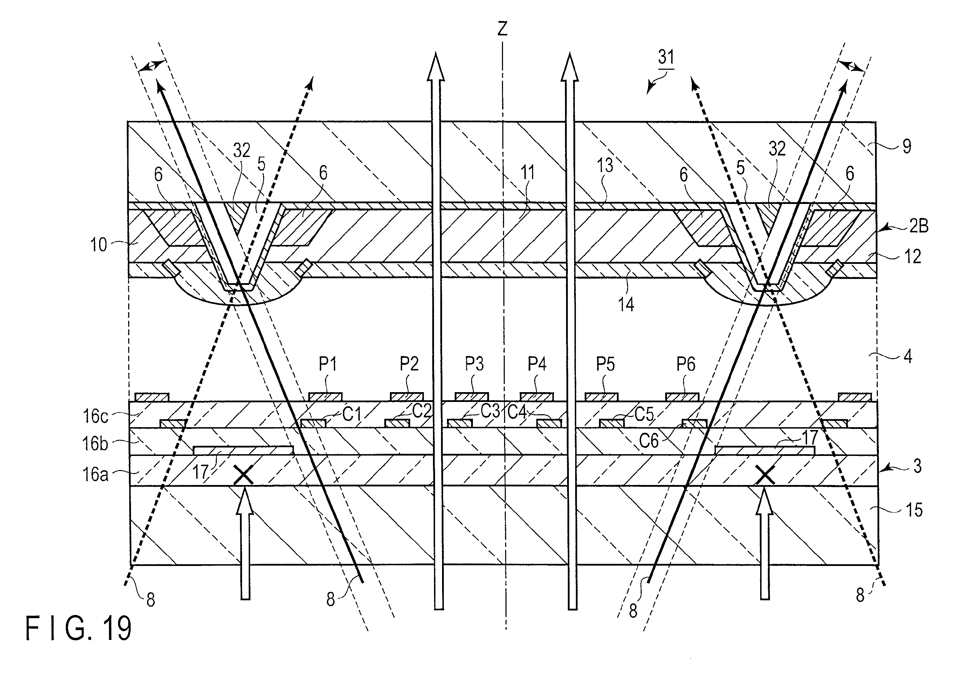

The description will be provided below based on FIG. 19 and FIG. 13.

In FIG. 13, the illustration of TFT and a metal wire is omitted. FIG. 13 shows an arrangement relationship between a comb-like electrode pattern formed by first electrodes P1 to P6 and color filters (sub-pixel opening) on a plane. In FIG. 13, the plane of color filters is assumed to be a parallelogram.

FIG. 19 is a partial sectional view showing an example of a liquid crystal display device according to the present embodiment.

A liquid crystal display device 31 includes a substrate for liquid crystal display 2B. A light-shielding portion (light-shielding protrusion) 32 is formed in the center portion of a transparent pattern 5 of the substrate for liquid crystal display 2B. The light-shielding portion 32 is formed by using the same material as that of a light-shielding pattern 6, for example, before the transparent pattern 5 is formed. The light-shielding portion 32 is included in the center and in the linear longitudinal direction of the transparent pattern 5 on a plane. With the formation of the light-shielding portion 32, skew light 8 emitted from the transparent pattern 5 is made harder from the eye of an observer to visually recognize.

As shown in FIG. 13, the first electrodes P1, P6 of an array substrate 3 are electrically connected to each other and further driven by other TFT than TFT that drives the other first electrodes P2 to P5. In other words, the first electrodes P1, P6 shown in FIG. 19 are driven as electrodes for viewing angle control and the other first electrodes P2 to P5 are driven as electrodes for display.

In the present embodiment, the drive voltage for viewing angle control can be applied to the first electrodes P1, P6 independently and thus, excellent viewing angle control can be exercised.

Also by including the light-shielding portion 32 in the center of the transparent pattern 5, an excellent image display can be provided to the observer.

### (Seventh embodiment)

In the present embodiment, a configuration to drive a liquid crystals 4 at low voltage in each of the above embodiments will be described.

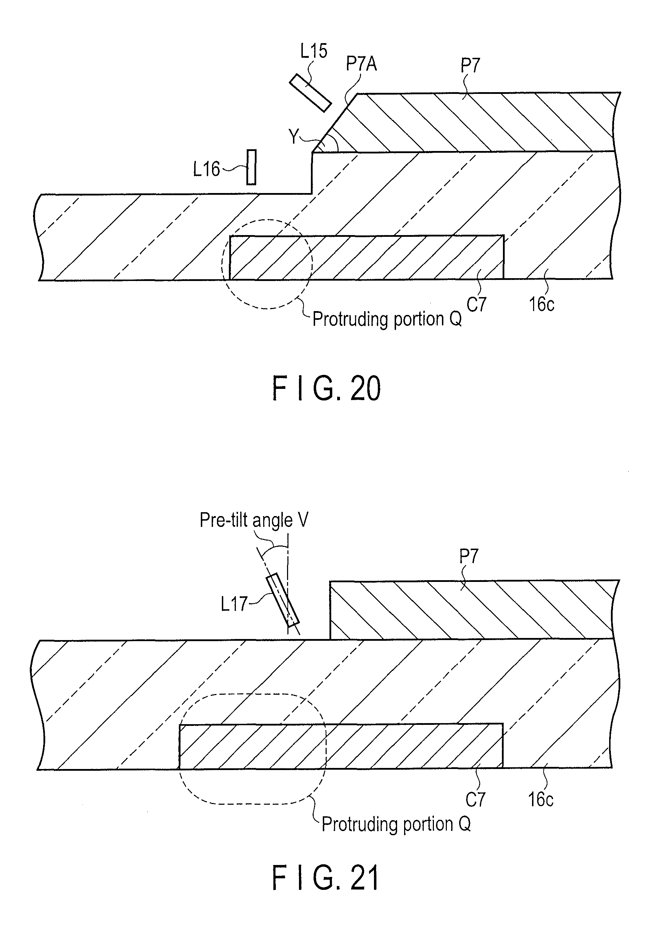

FIG. 20 is a partial sectional view showing a first example of the configuration to drive the liquid crystals 4 at low voltage in a liquid crystal display device according to the present embodiment.

In FIG. 20, a side face P7A of the section of a first electrode P7 on the side of a protruding portion Q of a second electrode C7 has an angle Y smaller than 90°. By providing tapering to the side face P7A of the first electrode P7 in this manner, the direction in which liquid crystal molecules L15 incline can be decided so that responsiveness can be improved, low gradations can be enhanced, and the liquid crystals 4 can be driven at low voltage.

Further, in FIG. 20, an insulating layer 16c formed above the protruding portion Q of the second electrode C7 is etched. By making the insulating layer 16c above the protruding portion Q of the second electrode C7 thinner in this manner, the direction in which liquid crystal molecules L16 above the protruding portion Q incline can be decided so that responsiveness can be improved, low gradations can be enhanced, and the liquid crystal 4 can be driven at low voltage.

FIG. 21 is a partial sectional view showing a second example of a configuration to drive the liquid crystals 4 at low voltage in the liquid crystal display device according to the present embodiment.

In FIG. 21, a pre-tilt angle V is provided to liquid crystal molecules L17 in initial vertical alignment. Accordingly, the direction in which the liquid crystal molecules L17 above the protruding portion Q incline can be decided so that responsiveness can be improved, low gradations can be enhanced, and the liquid crystals 4 can be driven at low voltage. Only by providing the pre-tilt angle V of about 0.1° to 1° from the vertical direction to the liquid crystal molecules L17, the liquid crystal molecules L17 are more likely to incline at low voltage.

Also by making the thickness of the first electrode P7 thicker, the direction in which the liquid crystal molecules on the protruding portion Q fall can be decided so that responsiveness can be improved, low gradations can be enhanced, and the liquid crystal 4 can be driven at low voltage.

In each of the above embodiments, an alignment maintenance layer may be formed on the inner surface of a liquid crystal panel after a liquid crystal cell formation by adding photopolymeric acrylate or the like to the liquid crystal and combining the use of exposure and the applied voltage for the purpose of enhancing the halftone of the liquid crystals.

Also in each of the above embodiments, an alignment maintenance layer providing a slight inclination angle to the liquid crystals for each of two or four liquid crystal domains in each sub-pixel may be formed by forming a coated film of a photosensitive polymeric liquid crystal or a coated film of photosensitive polyorganosiloxane or the like on both sides or one side of the inner surface of a liquid crystal panel, forming the liquid crystal cell, and combining the use of exposure and the applied voltage.

In each of the above embodiments, pixels may include red color filters, green color filters, blue color filters, and color filters of the other color like, for example, a transparency or complementary color.

## Claims

1. A substrate for liquid crystal display, comprising:
a polygonal pixel or a polygonal sub-pixel having parallel sides opposite to each other in a plane shape; and
linear patterns included on the parallel sides opposite to each other of the polygonal pixel or the polygonal sub-pixel to allow skew light to pass therethrough.

2. The substrate for liquid crystal display according to claim 1, wherein each linear pattern has a configuration in which a linear transparent pattern is sandwiched between linear light-shielding patterns in the plane shape.

3. The substrate for liquid crystal display according to claim 2, further comprising:
light-shielding portions in each center and in each linear longitudinal direction of the transparent patterns in the plane shape.

4. The substrate for liquid crystal display according to claim 1, further comprising:
a transparent conductive film formed above the linear patterns.

5. The substrate for liquid crystal display according to claim 1, comprising:
a transparent substrate comprising the linear patterns formed above one surface thereof;
a transparent conductive film stacked above the surface of the transparent substrate above which the linear patterns are formed; and
color filters of polygonal pixels or polygonal sub-pixels including the polygonal pixel or the polygonal sub-pixel formed above the transparent conductive film.

6. The substrate for liquid crystal display according to claim 5, wherein at least two of a red color filter, a green color filter, and a blue color filter are used as the color filters.

7. The substrate for liquid crystal display according to claim 1, wherein plane shapes of the polygonal pixels or the polygonal sub-pixels are one of a rectangle, a parallelogram, and a polygon in a "<" formed dogleg-shape.

8. The substrate for liquid crystal display according to claim 1, **characterized in that** portions where the transparent patterns are formed are thicker than the other portions.

9. A liquid crystal display device, comprising:
a substrate for liquid crystal display including a polygonal pixel or a polygonal sub-pixel having parallel sides opposite to each other in a plane shape and linear patterns included on the parallel sides opposite to each other of the polygonal pixel or the polygonal sub-pixel to allow skew light to pass therethrough; and
an array substrate opposite to the substrate for liquid crystal display via a liquid crystal layer and including an active element to drive liquid crystals of the liquid crystal layer.

10. The liquid crystal display device according to claim 9, wherein the array substrate includes a first electrode and a second electrode to which different potentials are applied to drive the liquid crystals for the polygonal pixels or the polygonal sub-pixels.

11. The liquid crystal display device according to claim 10, wherein
the first electrode has a first comb-like pattern connected to the active element for driving the liquid crystals, and
the second electrode has a second comb-like pattern disposed below the first electrode via an insulating layer and arranged in a position in a horizontal direction protruding from an edge of the first electrode in a direction opposite to a center axis dividing the polygonal pixel or the polygonal sub-pixel into two portions in a vertical direction.

12. The liquid crystal display device according to claim 10, wherein
two or more active elements including the active element are included in the polygonal pixel or the polygonal sub-pixel, and
the two or more active elements included in the polygonal pixel or the polygonal sub-pixel are respectively connected to two or more portions that are electrically independent in the first electrode for the polygonal pixel or the polygonal sub-pixel.

13. The liquid crystal display device according to claim 10, wherein the first electrode and the second electrode are formed from conductive metal oxide that is transparent in a visible range.

14. The liquid crystal display device according to claim 9, wherein the liquid crystals has negative dielectric constant anisotropy.
